# EUROPÄISCHE PATENTSCHRIFT

(11) **EP 0 842 252 B1**
(45) Veröffentlichungstag und Bekanntmachung des Hinweises auf die Patenterteilung: **20.10.1999**
(21) Anmeldenummer: 96925666.8
(22) Anmeldetag: 05.07.1996
(51) Int. Cl.: C11D 3/37

(54) **WASCHVERFAHREN MIT POLYCARBONSÄURESALZEN**
WASHING PROCESS USING POLYCARBOXYLIC ACID SALTS
PROCEDE DE LAVAGE AVEC DES SELS D'ACIDE POLYCARBOXYLIQUE

(30) Priorität: 18.07.1995 DE 19526089
(43) Veröffentlichungstag der Anmeldung: 20.05.1998
(73) Patentinhaber: BAYER AG, 51368 Leverkusen (DE)
(72) Erfinder: HEUER, Lutz, D-47800 Krefeld (DE); JOENTGEN, Winfried, D-50769 Köln (DE); GROTH, Torsten, D-51061 Köln (DE); WAGNER, Paul, D-40597 Düsseldorf (DE); HEISE, Klaus-Peter, D-51519 Odenthal (DE)
(86) Internationale Anmeldenummer: EP9602959
(87) Internationale Veröffentlichungsnummer: WO9704063

(56) Entgegenhaltungen:
- EP-A- 0 256 366
- EP-A- 0 542 645
- EP-A- 0 609 121
- DE-A- 3 603 471
- DE-A- 4 428 638
- CHEMICAL ABSTRACTS, vol. 101, no. 18, 29.Oktober 1984 Columbus, Ohio, US; abstract no. 153878w, "LIQUID CLEANING COMPOSITIONS" Seite 105; Spalte 2; XP002018193 & JP,A,59 036 200 (KAO CORP.) 28.Februar 1984

## Beschreibung

Die Erfindung betrifft ein verbessertes Waschverfahren und neue Flüssigwaschmittel.

Zum Waschen von Wäsche und Textilien sind viele Verfahren bekannt. Zumeist wird ein Waschmittel als chemische Hilfe und eine Waschmaschine als mechanische Hilfe sowie Wasser als Medium zur Aufnahme von Schmutz eingesetzt (Naßwäsche). Mit dem Wasser wird in der Regel die sogenannte Wasserhärte mit in den Waschprozeß eingetragen, welche im wesentlichen aus Calcium- und Magnesium-, Sulfat-, Carbonat- und Hydrogencarbonat-Ionen gebildet wird. Die Salze stören den Waschprozeß, da sie mit den waschaktiven Tensiden Salze bilden können und da sie verhindern oder erschweren, daß Flecken aus dem Waschgut entfernt werden. Die Wasserhärte wird üblicherweise durch im Waschmittel enthaltene Zusätze wie Polyphosphate, Zeolithe oder Schichtsilikate, sogenannte Builder, reduziert. Dies stößt an zwei Grenzen: Phosphate sind nach Waschmittelgesetz nur noch begrenzt erlaubt und Zeolithe oder Schichtsilikate, die als unlösliche Feststoffe in die Waschflotte eingebracht werden, benötigen CoBuilder, um sie mit weiterem Wasser aus dem Waschgut auszuspülen. Die Kombination Builder/Co-Builder ist selbst aber nur mit einer Mindestmenge Wasser ausspülbar (50-60 l), kleinere Mengen an Wasser im Hauptwaschgang führen zu Ablagerungen auf der Wäsche.

Alternativ zur Verwendung von Buildern kann das Wasser aber auch wenigstens teilweise enthärtet (z.B. Ionenaustauscher, Umkehrosmose, Elektrodialyse) werden, was den Gebrauch von Buildern überflüssig macht. Hier treten insbesondere bei der Verwendung von enthärteten Wasser (und gegebenenfalls bei Überdosierung des Waschmittels) aber Probleme mit der Schaumbildung (s. G.Jakobi, M.J. Schwuger in Waschmittelchemie, Henkel & Cie GmbH (Herausgeber), Düsseldorf 1976, S. 103) auf, die durch elektrischen Kurzschluß die Maschine zerstören kann. Hinzu kommt, daß enthärtetes Wasser bislang für alle Waschgänge, also auch für den ersten Spülgang verwendet wurde, so daß. da sehr weiches Wasser schlechter die Seife aus dem Textil ausspült, mehr Wasser zum Spülen verwendet werden muß.

Der Erfindung liegt die Aufgabe zugrunde, ein verbessertes Waschverfahren zur Verfügung zu stellen.

Die Erfindung betrifft ein Waschverfahren zum Waschen von Textilien mit Flüssigwaschmitteln unter Verwendung von enthärtetem Wasser und Salzen wenigstens einer Polycarbonsäure, dadurch gekennzeichnet, daß die Polycarbonsäure zu 1 bis 90 Mol-% als Natriumsalz und zu 0,1 bis 10 Mol-% als Calcium- oder Magnesiumsalz vorliegt.

Erfindungsgemäß ist es möglich, die Polycarbonsäure teilweise in die entsprechenden Calciumsalze oder Magnesiumsalze zu überführen oder mit Calcium- oder Magnesiumsalzen zu versetzen, wobei als Anionen insbesondere Sulfat, Carbonat, Phosphat oder Chlorid in Frage kommen.

In einer besonders bevorzugten Ausführungsform wird eine selbstdosierende Waschmaschine verwendet.

Bei der Polycarbonsäure handelt es sich um die üblicherweise als Builder eingesetzten Säuren, z.B. um Polyacrylate, Polymaleinate insbesondere aber um die Salze von Polyasparaginsäuren. In einer besonders bevorzugten Ausführungsform werden Salze einer derartigen Polyasparaginsäure verwendet, die zu mehr als 50 %, insbesondere zu mehr als 60 % als β-Polyasparaginsäure vorliegt und ein Molekulargewicht von >500, insbesondere von 1 000 bis 5 000 gemessen mittels Gelpermeationschromatographie in wäßrigen Systemen aufweist.

Die Polyasparaginsäure kann dabei in üblicher Weise erhalten werden, beispielsweise ausgehend von Asparaginsäure. insbesondere aber ausgehend durch thermische Kondensation auf Basis von Maleinsäureanhydrid und Ammoniak, gegebenenfalls über die Zwischenstufe Polysuccinimid. siehe EP-A-256 366 (= USA 4 839 461). Diese Polyasparaginsäuren werden bevorzugt gegenüber anderen Polycarbonsäuren verwendet, da sie gute Wascheigenschaften als Builder und Cobuilder aufweisen, biologisch abbaubar sind und überraschend wasserlösliche, nicht kristallisierende Salze mit Calcium- und/oder Magnesiumionen bilden (s.o.). und daher aus Flüssigwaschmitteln nicht ausfallen.

Die erfindungsgemäß zu verwendenden Waschmittel enthalten vorzugsweise zusätzlich Tenside, Bleichmittel und weitere funktionelle Inhaltsstoffe wie Enzyme, optische Aufheller, Wasserglasstellmittel, Farbübertragungsinhibitoren, Farbstoffe und Parfümöle. Im einzelnen wird hierzu verwiesen beispielsweise auf Hermann G. Hauthal, Chemie in unserer Zeit. 1992, S. 293-303.

Gut geeignet für die flüssige Dosierung von Bleichmitteln sind:
Wasserstoffperoxid (bevorzugt)
Natriumhypochlorid
Na-perborat (als konzentrierte Lösung)
Na-percarbonat (als konzentrierte Lösung)
Na-persulfat (als konzentrierte Lösung)
Na-chlorat (als konzentrierte Lösung).

Der flüssigen Formulierung, die als Lösung oder Dispersion oder Emulsion vorliegen kann, können auch geringe (≤ 10 %) suspendierbare Anteile an Zeolith oder Schichtsilikat zugesetzt werden, um bestimmte Effekte wie aktivierte Oberfläche etc. einzubringen (Schmutzredeposition auf Zeolith).

Die erfindungsgemäß zu verwendenden Calcium- oder Magnesiumsalze regeln überraschenderweise die Wasserhärte des enthärteten Wassers über die Zudosierung des Waschmittels und vermeiden so überraschenderweise eine starke, zerstörende Schaumbildung.

Das erfindungsgemäße Waschverfahren verläuft vorzugsweise in folgenden Stufen:
1. Vorwaschgang (gegebenenfalls) mit deionisiertem Wasser und Waschmittelmenge nach Vorgabe (automatische Dosierung)
2. Hauptwaschgang mit deionisiertem Wasser und Waschmittelmenge nach Messung über Schaumentwicklung in der Maschine (optimierte Menge)
3 - 6. Spülgänge mit Wasser aus der Haushaltsleitung
7. letzter Spülgang mit deionisiertem Wasser.

In einer weiteren bevorzugten Ausführungsform entfallen die Schritte 1, 5 und 6.

Enthärtetes Wasser wird nur für den Hauptwaschgang und den letzten Spülgang verwendet, sodaß dort keine Calcium- oder Magnesiuminkrustation auf der Wäsche vorkommen kann. Der erste Spülgang hingegen enthält hartes Wasser, um die Spülung zu optimieren und wenig Wasser zu verbrauchen. Hierfür wird vorzugsweise eine spezielle Waschmaschine eingesetzt, welche anhand geringer Schaumbildung durch Leitfähigkeitssensoren o.ä. die optimale Menge Waschmittel flüssig zudosiert,

So wird:
- weniger Waschmittel (Tenside, Bleichmittel) verbraucht
- kein oder nur geringe Mengen Builder auf Basis Zeolith/Schichtsilikat verbraucht
- weniger Wasser und damit weniger (Heiz) Energie verwendet.

Hinzu kommt, daß die Menge von Soda (Builder, löslich) ebenfalls herabgesetzt werden kann und durch die Nicht-Verwendung von Zeolith/Schichtsilikat, welche aus Wasserglas sehr energieaufwendig hergestellt werden, weiter Energie eingespart wird.

Wird das Bleichmitttel separat zudosiert, kann es
- weniger sein, da dann die (oxidierbaren) Tenside teilweise oder größtenteils entfernt werden können
- später als der Rest zudosiert werden, und so Tenside etc. eingespart werden.

## Patentansprüche

1. Waschverfahren zum Waschen von Textilien mit Flüssigwaschmitteln unter Verwendung von enthärtetem Wasser und Salzen wenigstens einer Polycarbonsäure, dadurch gekennzeichnet, daß die Polycarbonsäure zu 1 bis 90 Mol-% als Natriumsalz und zu 0,1 bis 10 Mol-% als Calcium- oder Magnesiumsalz vorliegt.

2. Waschverfahren gemäß Anspruch 1, dadurch gekennzeichnet, daß die Polycarbonsäure eine Polyacrylsäure, Polyacrylmaleinsäure oder Polyasparaginsäure ist.

3. Verfahren nach wenigstens einem der vorhergehenden Ansprüche, dadurch gekennzeichnet, daß die Polycarbonsäure eine Polyasparaginsäure ist, deren Anteil an β-Verknüpfungen >50 % ist, und die ein Molekulargewicht von 500 bis 5 000 aufweist.

4. Verfahren gemäß Anspruch 3, dadurch gekennzeichnet, daß die Polyasparaginsäure durch thermische Polykondensation von Maleinsäureanhydrid oder Maleinsäure und Ammoniak erhalten wurde.

## Claims

1. Washing process for washing textiles with liquid detergents using softened water and salts of at least one polycarboxylic acid, characterized in that the polycarboxylic acid is present to the extent of 1 to 90 mol% as the sodium salt and to the extent of 0.1 to 10 mol% as the calcium or magnesium salt.

2. Washing process according to Claim 1, characterized in that the polycarboxylic acid is a polyacrylic acid, polyacrylomaleic acid or polyaspartic acid.

3. Process according to at least one of the preceding claims, characterized in that the polycarboxylic acid is a polyaspartic acid, the proportion of β-linkages of which is >50 % and which has a molecular weight of 500 to 5000.

4. Process according to Claim 3, characterized in that the polyaspartic acid has been obtained by thermal polycondensation of maleic anhydride or maleic acid and ammonia.

## Revendications

1. Procédé pour le lavage de matières textiles à l'aide de produits de lavage liquides avec utilisation d'eau adoucie et de sels d'au moins un acide polycarboxylique, caractérisé en ce que l'acide polycarboxylique est à l'état de sel de sodium pour 1 à 90 mol % et à l'état de sel de calcium ou de magnésium pour 0,1 à 10 mol %.

2. Procédé de lavage selon la revendication 1, caractérisé en ce que l'acide polycarboxylique est un acide polyacrylique, un acide polyacrylmaléique ou un acide polyaspartique.

3. Procédé selon au moins une des revendications qui précédent, caractérisé en ce que l'acide polycarboxylique est un acide polyaspartique dont la teneur partielle en liaisons β est supérieure à 50 % et qui a un poids moléculaire de 500 à 5 000.

4. Procédé selon la revendication 3, caractérisé en ce que l'acide polyaspartique a été obtenu par polycondensation à la chaleur de l'anhydride ou l'acide maléique et de l'ammoniac.
